# EUROPÄISCHE PATENTSCHRIFT

(11) **EP 2 152 189 B1**
(45) Veröffentlichungstag und Bekanntmachung des Hinweises auf die Patenterteilung: **23.11.2016**
(21) Anmeldenummer: 08760573.9
(22) Anmeldetag: 05.06.2008
(51) Int. Cl.: A61C 8/00

(54) **AUFNAHMEELEMENT FÜR EIN IMPLANTAT**
RECEIVING ELEMENT FOR AN IMPLANT
ÉLÉMENT DE RÉCEPTION D'UN IMPLANT

(30) Priorität: 05.06.2007 DE 102007026504
(43) Veröffentlichungstag der Anmeldung: 17.02.2010
(73) Patentinhaber: Straumann Holding AG, 4002 Basel (CH)
(72) Erfinder: GUENTER, Daniel, 4437 Waldenburg (CH); BAMMERLIN, Rainer, 79400 Kandem (DE)
(74) Vertreter: Modiano, Micaela Nadia
(86) Internationale Anmeldenummer: PCT/EP2008/056997
(87) Internationale Veröffentlichungsnummer: WO 2008/148843

(56) Entgegenhaltungen:
- EP-A- 1 447 056
- WO-A-02/30315
- WO-A-98/55039
- WO-A-2005/037126
- DE-U1- 20 304 757

## Beschreibung

Die vorliegende Erfindung betrifft ein Aufnahmeelement für ein Implantat, im Besonderen für Schrauben- oder zylinderförmige Implantate.
Derartige Implantate sind z. B. aus der Dentaltechnik hinreichend bekannt und ähneln im Wesentlichen einer Schraube, wobei der apikale Bereich der Schraube in einen Knochen eingesetzt wird und der koronale Bereich zur Aufnahme einer Zahnprothese geeignet ist. In der Dentalchirurgie sind zusätzlich an dem Implantat angebrachte Halteelemente in unterschiedlichen Ausführungsformen bekannt, die einerseits das Implantat fixieren und andererseits ein steriles Entnehmen aus dem Aufnahmeelement ermöglichen. Darüberhinaus stellen sie sicher, dass ein Implantat im Zeitraum von der Herstellung bis zum chirurgischen Eingriff nicht mit nicht-sterilen Mitteln, wie z. B. Hände, in Berührung kommen. Das massgebliche Anwendungsgebiet der Erfindung liegt dort, wo die Implantate, z. B. aus Gründen erforderlicher steriler Arbeitsweise, zumindest nicht direkt mit den Händen erfasst werden dürfen, und wo es darauf ankommt, die Implantate sicher zu halten.

Derartige Aufnahmeelemente haben die Funktion, das Implantat sicher zu transportieren und zur Lagerung eine sterile Umgebung bereitzustellen. Zur Entnahme des Implantats während eines unter sterilen Bedingungen durchgeführten chirurgischen Eingriffs, entnimmt man das Implantat aus dem Aufnahmeelement, welches im allgemeinen ein an dem Implantat befestigtes Halteelement aufweist (im folgenden wird die Kombination von Implantat und daran angebrachtem Halteelement vereinfacht Implantataufbau genannt) z. B. mit einem an das Implantat angesetzte Werkzeug, und setzt daraufhin das Implantat auf die vorbereitete Implantatstelle des Patienten ein und entfernt das Halteelement. Zum weiteren Schutz ist auch üblich, das Aufnahmeelement bis zum Zeitpunkt des Implantierens in einem sekundären Schutzelement aufzubewahren.

### Stand der Technik

Aus der WO98/55039 ist eine in einer Außenkapsel einbringbare zylindrische Ampulle bekannt, die zur Aufnahme eines Implantats geeignet ist. Die Ampulle weist dabei einen Stirnbereich auf, der mit einer lateral offenen Einbuchtung versehen ist. Diese Einbuchtung dient zum Einführen eines Implantataufbaus, der aus dem Implantat und einem zusätzlich mit dem Implantat verbundenen Halteelement besteht. Der Implantataufbau wird durch Einpressen durch eine Öffnung hindurch in einer Einschnürung in der Ampulle fixiert. Um eine ausreichende Fixierung zu erhalten, muss beim Einpressen des Implantats ein nicht unerheblicher Druck aufgewendet werden, dies hat bei einer starren Struktur einer Ampulle und eines Aufnahmeelements die Folge, dass das Konstruktionsmaterial einer erheblichen Beanspruchung unterliegt, da sich die dabei auftretenden Kräfte sowohl entlang der Dehnungsnut als auch entlang der Zylinderfläche ausbreiten. Es besteht die Gefahr, dass bei zu starkem Druck Risse an der Stirnseite auftreten, die somit die Klemmwirkung innerhalb der Einschnürung vermindern oder gar aufheben können. Desweiteren ist, bedingt durch die starre Konstruktion, ein Einsetzen bei geringem Öffnungswinkel der Einbuchtung nur mit einem hohen Kraftaufwand möglich, da eine Dehnung nur in dem Bereich der relative schmalen Dehnungsnut möglich ist und die Zylinderfläche die Dehnung weiter hemmt. Bei Erweiterung des Öffnungswinkels der Einbuchtung erleichtert sich zwar das Einsetzen des Dentalimplantats, aber auf Kosten eines guten Klemmverhaltens, so dass das Implantat leicht aus der Einbuchtung rutschen und auf nicht-sterile Oberflächen gelangen kann. Im schlimmeren Fall kann das Implantat auch beschädigt werden, wenn es zum Beispiel vom Operationstisch auf den Fussboden fällt. Die Stirnseite der Ampulle ist zudem relativ schmal im Querschnitt und die gesamte Haltekraft zwischen einem Implantat und der Innenseite der Einschnürung ist auf diesen schmalen Bereich beschränkt, wobei folglich die Halte- bzw. Abzugskraft durch den Druck bzw. das Zusammendrücken beim Entnehmen des Implantates aus der Halterung erhöht wird. Dadurch wird der Haltegriff des Implantates verstärkt, so dass der Entnahmevorgang schwer kontrollierbar wird.

Darüberhinaus kann es nach einer Lagerung über einen längeren Zeitraum zu einer Schwächung an der Klemmstelle kommen, was im ungünstigen Fall dazu führt, dass das Implantat nicht mehr mit voller Klemmkraft gehalten wird und somit in der Ampulle pendeln kann und durch den Kontakt mit der Ampulle beschädigt werden kann.

Desweiteren kann sich die zylinderförmige Ampulle in abgelegter Lage in einem bestimmten Bereich um ihre Achse bewegen, was ein Greifen erschwert.

Ein Aufnahmeelement gemäß Oberbegriff des Anspruchs 1 ist aus der WO2005/037126A1 bekannt.

### Zusammenfassung der Erfindung

In Anbetracht der oben genannten Nachteile der bisher verwendeten Vorrichtungen zur Aufnahme eines Dentalimplantats, liegt der vorliegenden Erfindung daher die Aufgabe zugrunde, ein Aufnahmeelement für ein Dentalimplantat bereitzustellen, das einen Dentalimplantataufbau sicherer fixiert und die beim Einsetzen des Dentalimplantataufbaus auf die Struktur des Aufnahmeelements auftretenden Kräfte besser umsetzen und ableiten kann. Desweiteren soll eine vereinfachte und sicherere Handhabung bereitgestellt werden und eine kostengünstige Herstellung mit vorhandenen Techniken möglich sein.

Der vorliegenden Erfindung liegt die Aufgabe zugrunde, ein Aufnahmeelement für ein Dentalimplantat mit einer verbesserten Stabilität und Kräfteumsetzung bereitzustellen, das die oben angeführten Probleme vermeidet.

Im Rahmen dieser Aufgabe besteht eine weitere Aufgabe der vorliegenden Erfindung darin, ein Aufnahmeelement für ein Dentalimplantat zu realisieren, das gegen ein Verrutschen auf einer Ablage besser geschützt ist.

Eine weitere Aufgabe der vorliegenden Erfindung besteht darin, dass das Aufnahmeelement vereinfacht und sicherer gehandhabt werden kann.

Eine weitere Aufgabe der vorliegenden Erfindung besteht darin, dass das Aufnahmeelement unkompliziert und kostengünstig mit herkömmlichen Verfahren hergestellt werden kann.

Die oben angeführten Aufgaben und weitere der nachfolgenden Beschreibung zu entnehmenden Aufgaben werden durch ein Aufnahmeelement für ein Dentalimplantat gemäß Anspruch 1 erfüllt. Weitere vorteilhafte Ausführungsformen der vorliegenden Erfindung sind Gegenstand der Unteransprüche.

Die konstruktiven Besonderheiten eines im Wesentlichen zylindrischen Aufnahmeelements gemäß der vorliegenden Erfindung bestehen darin, dass der das Aufnahmeelement haltende Kopfbereich vom Rumpf nahezu entkoppelt ist, um so auftretende Kräfte beim Entnehmen des Dentalimplantats aus der Halterung von der dafür vorgesehenen Öffnung wirkungsvoll abzuleiten und/oder gar vollständig zu eliminieren. Der im Wesentlichen quadratische Rumpfbereich ist vorteilhaft mit einer offenen Seite zum leichten Einführen des Dentalimplantats ausgestattet. Desweiteren weist der Kopfbereich eine erste Oberfläche, die zur klemmenden Verbindung mit einem Dentalimplantat geeignet ist, und eine zweite Oberfläche, die ein Berühren des Dentalimplantats mit der Innenwandung des Rumpfteiles verhindert, auf.

Desweiteren ist eine Seite des Aufnahmeelements mit einer ebenen Oberfläche ausgestattet, die eine stabile Lagerung auf einer Ablage, z. B. dem Operationstisch gewährleistet. In einer bevorzugten Ausführungsform weist das Aufnahmeelement im Rumpfbereich eine Mehrzahl von Verstärkungsrippen auf, die zum einen die Aussenwand verstärken, zum anderen für einen besseren Griff sorgen.

### Kurzbeschreibung der Figuren

Weitere Merkmale und Vorteile der vorliegenden Erfindung sowie die Wirkungsweise der exemplarischen Ausführungsformen der vorliegenden Erfindung werden unten mit Bezug auf die begleitenden Zeichnungen beschrieben.

Die begleitenden Zeichnungen veranschaulichen die vorliegende Erfindung und dienen zusammen mit der Beschreibung weiterhin dazu, die Grundsätze der Erfindung zu erklären und es einem Fachmann auf dem betreffenden Gebiet zu ermöglichen, die Erfindung herzustellen und zu verwenden. Zur besseren Übersicht wird auf die Bezeichnungen von gleichen Elementen in nachfolgenden Figuren meist verzichtet, sofern diese eindeutig als "wiederholte Elemente" erkennbar sind.

Dabei zeigen:
Fig. 1 eine Seitenansicht eines Aufnahmeelements für ein Dentalimplantat gemäß einer Ausführungsform der Erfindung;
Fig. 2 eine Frontansicht eines Aufnahmeelements für ein Dentalimplantat gemäß Fig. 1;
Fig. 3 ein Längsschnitt eines Aufnahmeelements für ein Dentalimplantat gemäß Fig.1, an der Schnittlinie A-A in Pfeilrichtung gesehen;
Fig. 4 ein Längsschnitt eines Aufnahmeelements für ein Dentalimplantat gemäß Fig.1, an der Schnittlinie B-B in Pfeilrichtung gesehen;
Fig. 5 eine Schnittansicht eines Aufnahmeelements für ein Dentalimplantat gemäß Fig.1, an der Schnittlinie F-F in Pfeilrichtung gesehen;
Fig. 6 eine Schnittansicht eines Aufnahmeelements für ein Dentalimplantat gemäß Fig.1, an der Schnittlinie D-D in Pfeilrichtung gesehen; und
Fig. 7 eine Aufsicht eines Aufnahmeelements für ein Dentalimplantat gemäß Fig.1.

### Beschreibung der bevorzugten Ausführungsformen der Erfindung

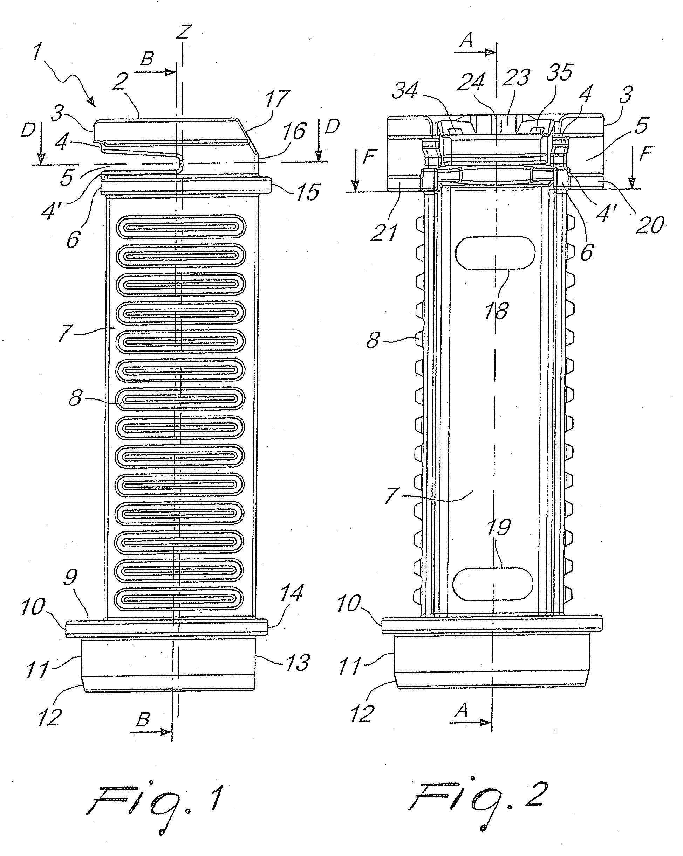

Anhand der nachfolgenden Figuren 1 bis 7 wird eine gegenwärtig bevorzugte Ausführungsform der vorliegenden Erfindung eines Aufnahmeelements für ein Dentalimplantat beschrieben, die aus einem im Wesentlichen zylindrischen Bodenbereich, einem das Dentalimplantat einschliessenden Rumpfbereich und einem flexiblen Kopfbereich, der aus zwei Platten gebildet wird, ausgestattet ist, wobei der Kopfbereich mit einer Klemmvorrichtung zur Aufnahme eines Dentalimplantats versehen ist, die geeignet ist, ein Dentalimplantat lösbar klemmend zu fixieren.

Figur 1 zeigt ein Aufnahmeelement 1 für ein Dentalimplantat, wobei das Aufnahmeelement 1 grundsätzlich drei Abschnitte aufweist. Ein erster Abschnitt der den Kopfbereich bildet, besteht aus einer etwa C-förmigen, ebenen Stirnseite 2, die eine erste Platte 3 umfasst, die zur Fixierung eines Dentalimplantats (nicht dargestellt) geeignet ist, wie weiter unten im Text beschrieben. An die erste Platte 3 schließt ein offener Bereich 5 an, der von dem an die erste Platte 3 angrenzenden ersten Absatz 4 und einem darunter liegenden zweiten Absatz 4' umgeben ist, der an einer zweiten Platte 6 angrenzt. Der vorzugsweise maulartig ausgebildete offene Bereich 5 erstreckt sich bevorzugt von seiner offenen Seite an einem jeweiligen Ende der Platten 3, 6 bis zu einer theoretischen Mittelachse Z des Aufnahmeelements 1, wobei vorteilhaft die Öffnungsweite im Bereich der Mittelachse Z geringer ist, als an der Außenseite. Durch den maulartigen Bereich 5 wird eine mechanische Entkopplung der Platten 3, 6 bzw. der ersten Platte 3 vom Rumpf 7 erzielt.

Auf der Seite, die nicht mit dem maulartigen Bereich 5 versehen ist, ist eine Anschrägung 17, die von einer Außenkante der ebene Stirnseite 2, bis zu einem ebenen Köpfbereich 16, vorgesehen, wobei der ebene Kopfbereich 16 an eine ebene Kopfkante 15 anschließt, die sowohl an den Kopfbereich 16, als auch an einen Rumpf 7 des Aufnahmeelements 1 angrenzt. Ein Teil der zweiten Platte 6, der an den maulartigen offenen Bereich 5 bzw. am zweiten Absatz 4' angrenzt, ist dabei im Wesentlichen plan ausgebildet. Der dem maulartigen Bereich 5 darunterliegende Teil der zweiten Platte 6 schließt dann an einen zweiten Abschnitt an, der von dem Rumpf 7 gebildet wird, und der mit einer Mehrzahl symmetrisch angeordneter Verstärkungsrippen 8 ausgestattet ist. Diese treten dabei aus der Oberfläche des Rumpfes 7 hervor und sind bevorzugt in gleichen Abständen zueinander angeordnet sind. In der bevorzugten Ausführungsform sind diese Verstärkungsrippen 8 in einer länglichen Form ausgebildet. An der der zweiten Platte 6 gegenüberliegenden Kante des Rumpfes 7 schließt sich eine Grundfläche 9 an, die im Wesentlichen rundsymmetrisch ist, auf der der Rumpf 7 rechtwinklig angeordnet ist. Der dritte Abschnitt umfasst eine perimetrische Umlaufkante 10, die zwischen der Grundfläche 9 und einem Bodenteil 11 eingebettet ist, wobei das Bodenteil 11 an einer Seite in den Standbereich 12 übergeht, der zum Aufstellen auf einer Oberfläche geeignet ist. Ein Bodenabschnitt 13, der zwischen der Bodenkante 14 und dem Standbereich 12 ausgebildet ist, ist vorteilhaft eben ausgebildet. An den Bodenabschnitt 13 angrenzend befindet sich die Bodenkante 14, die auch eben ausgebildet ist. Durch die ebene Ausführungsform der Kopfkante 15 und der Bodenkante 14 ist es möglich das Aufnahmeelement 1 auf einer Ablage stabil zu positionieren, und sowohl ein Wegrollen zu vermeiden, als auch ein einfaches Greifen zu ermöglichen.

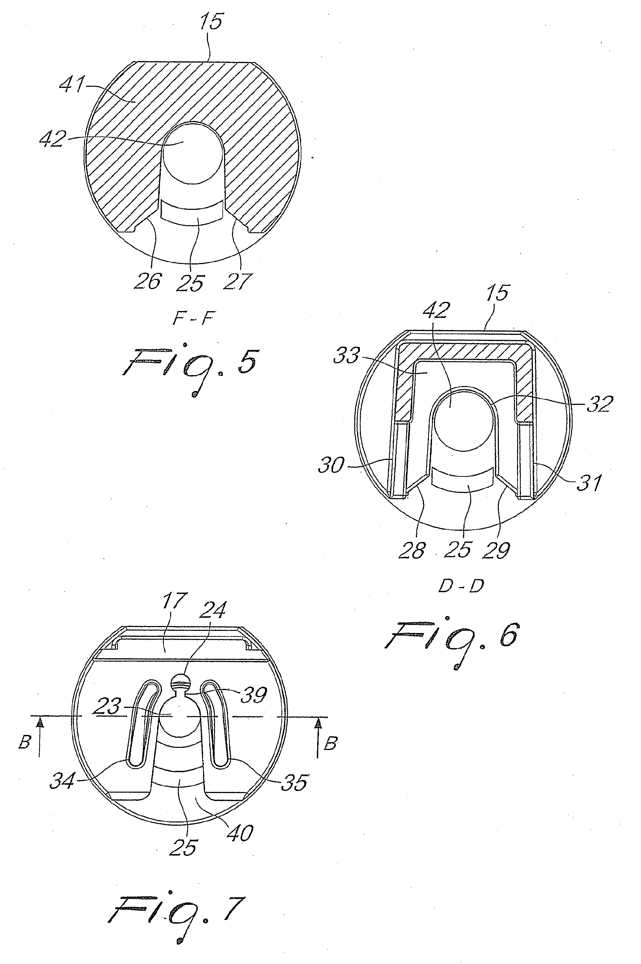

Figur 2 zeigt weitere Merkmale des Aufnahmeelements 1, wobei ein erster Durchbruch 23 und ein zweiter Durchbruch 24 zentrisch in der ersten Platte 3 angeordnet sind. Der zweite Durchbruch 24 kann vorzugsweise einen geringeren Durchmesser als der erste Durchbruch 23 haben, obgleich in der gegenwärtig bevorzugten Ausführungsform der Unterschied der Durchmesser nicht unabdingbar ist. Der erste Durchbruch 23 und der zweite Durchbruch 24 sind dabei an einer Stelle miteinander durch eine offene Nut 39 verbunden, wie auch in Fig. 7 dargestellt. An den ersten Durchbruch 23 schließt eine Öffnung 40, siehe Figur 7, der ersten Platte 3 an. Weiterhin sind im Rumpf 7, wie in der Figur 2 ersichtlich, ein erstes Langloch 18 und ein zweites Langloch 19 vorhanden.

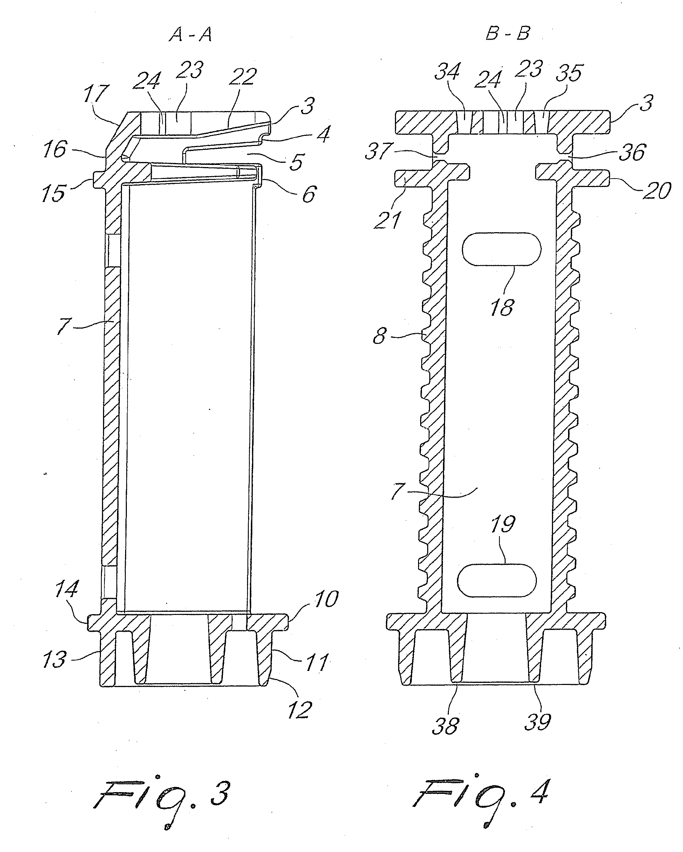

Figur 3 und 4 zeigen weitere Merkmale des Aufnahmeelements 1, wobei ein Bereich der ersten Platte 3 mit einem angeschrägten Schenkel 22 versehen ist, der von der Außenkante bis etwa in den Bereich einer theoretischen Mittelachse Z des Aufnahmeelements 1 reicht, wobei der angeschrägte Schenkel 22 ein leichtes Einführen eines Dentalimplantats ermöglicht. Desweiteren ist die erste Platte 3 beim Eindrücken des Dentalimplantats in Bezug auf die zweite Platte 6 elastisch in einer senkrecht zur Mittelachse Z des Aufnahmeelements 1 verlaufenden Richtung verformbar, solange bis das Dentalimplantat in den ersten Durchbruch 23 einrastet und klemmend gehalten wird, wobei ein erster Spalt 36 und ein zweiter Spalt 37 des maulartigen Bereichs 5 die erste Platte 3 vom Rumpf 7 bzw. von der zweiten Platte 6, wie vorstehend erwähnt, mechanisch entkoppeln. Die die auf der entgegengesetzten Seite befindliche Anschrägung 17 hat darüber hinaus vorteilhaft eine federnde Wirkung. Eine erste Verstärkung 20 und eine zweite Verstärkung 21 dienen zur Festigung der Konstruktion unter der beim Eindrücken des Dentalimplantats entstehenden Spannungen. Eine erste Aussparung 34 und eine zweite Aussparung 35, die eine konische Form haben können, und die in der ersten Platte 3 symmetrisch und benachbart dem ersten Durchbruch 23 und dem zweiten Durchbruch 24 angeordnet sind, sind zur Verteilung der Kräfte beim Eindrücken des Dentalimplantats durch die Öffnung 40 der ersten Platte 3 geeignet, und die erste Platte 3 ist dabei in einer Richtung, die senkrecht zur Mittelachse Z verläuft, elastisch dehnbar. Die konische Form der Aussparungen ist besonders aus fertigungstechnischen Gründen bevorzugt, wenn dass Aufnahmeelement durch Spritzgußverfahren gefertigt wird. Der zweite Durchbruch 24 weist, wie vorstehend erläutert, einen geringeren Durchmesser als der erste Durchbruch 23 auf und ist mit diesem mit der Nut 39 verbunden, so dass der Durchbruch 24 als Dehnungsdurchbruch dient und sich beim Einpressen eines Dentalimplantats erweitern kann. Durch die elastische Verformbarkeit der ersten Platte 3 ergibt sich vorteilhaft sowohl eine Klemm-, als auch ein Schnappverbindung, die das Dentalimplantat sicher in dem ersten Durchbruch 23 fixiert.

Figuren 5 und 6 zeigen den Kopfbereich des Aufnahmeelements 1, wobei Fig. 5 eine Fläche 41 zeigt, die im Bereich der Öffnung 40, siehe Figur 7, eine erste Fase 26 und eine zweite Fase 27 aufweist, die zur einfachen Einführung des Dentalimplantat dienen. Der Winkel der sich zwischen der ersten und zweiten Fase ausbildet, ist vorteilhaft im Bereich von 80 bis 120 Grad ausgebildet. Die Fläche 41, die über den gesamten Querschnitt bis zu den Fasen 26, 27 eingeschlossen ist, ist starr ausgebildet, um den in Fig. 6 dargestellten U-förmigen Bereich 32 auszubilden. Die Innenfläche des U-förmigen Bereichs 32 bildet dabei einen Anschlagbereich 33, an dem ein eingesetztes Dentalimplantat in einer stabilen Lage gehalten wird, so dass eine Berührung, z. B. beim Transport, mit den Innenwänden des Rumpfes 7 ausgeschlossen wird. Die Grundfläche 9 aus Fig.1 weist im Abschnitt der Öffnung 40 einen Kreisringabschnitt 25 auf, der etwa die Breite des U-förmigen Bereichs 32 hat, und besitzt zentrisch einen dritten Durchbruch 42, der einen größeren Durchmesser als der erste und zweite Durchbruch 23, 24 hat.

Figur 7 zeigt, dass der erste Durchbruch 23 mit dem dritten Durchbruch 42 fluchtet. Die erste Aussparung 34 und die zweite Aussparung 35 verlaufen im Bereich der Öffnung 40 im Wesentlichen parallel dazu, wobei sie nahe dem ersten 23 und zweiten 24 Durchbruch sich in Richtung des Mittelpunkts der zweiten Durchbruch 24 leicht krümmen.

Das Aufnahmeelement 1 kann mit herkömmlichen Verfahren, z. B. im Formguss hergestellt werden und besteht bevorzugt aus einem elastischen Kunststoff.

Wenn in irgendeinem der Ansprüche erwähnte technische Merkmale mit einem Bezugszeichen versehen sind, wurden diese Bezugszeichen lediglich eingeschlossen, um die Verständlichkeit der Ansprüche zu erhöhen. Entsprechend haben diese Bezugszeichen keine einschränkende Auswirkung auf den Schutzumfang eines jeden Elements, das exemplarisch durch solche Bezugszeichen bezeichnet wird.

| Bezugszeichenliste | |
|---|---|
| 1 | Aufnahmeelement |
| 2 | Stirnseite |
| 3 | 1. Platte |
| 4 | 1. Absatz |
| 4' | 2. Absatz |
| 5 | maulartiger Bereich |
| 6 | 2. Platte |
| 7 | Rumpf |
| 8 | Verstärkungsrippen |
| 9 | Grundfläche |
| 10 | Umlaufkante |
| 11 | Bodenteil |
| 12 | Standbereich |
| 13 | ebener Bodenabschnitt |
| 14 | Bodenkante |
| 15 | Kopfkante |
| 16 | ebener Kopfbereich |
| 17 | Anschrägung |
| 18 | 1. Langloch |
| 19 | 2. Langloch |
| 20 | 1. Vorsprung |
| 21 | 2. Vorsprung |
| 22 | Angeschrägter Schenkel |
| 23 | 1. Durchbruch |
| 24 | 2. Durchbruch |
| 25 | Kreisringabschnitt |
| 26 | 1. Fase |
| 27 | 2. Fase |
| 28 | 1. Einschubkante |
| 29 | 2. Einschubkante |
| 30 | 1. Führungsleiste |
| 31 | 2. Führungsleiste |
| 32 | Anschlagbereich |
| 33 | U-förmiger Bereich |
| 34 | 1. Aussparung |
| 35 | 2. Aussparung |
| 36 | 1. Spalt |
| 37 | 2. Spalt |
| 38 | zylindrische Innenwand |
| 39 | Nut |
| 40 | Öffnung |
| 41 | Fläche |
| 42 | 3. Durchbruch |

## Patentansprüche

1. Aufnahmeelement (1) für ein Dentalimplantat mit einer ersten Platte (3) und einer zweiten Platte (6), die senkrecht zur Mittelachse (Z) des Aufnahmeelements (1) verlaufen und die derart ausgebildet sind, um ein Dentalimplantat lösbar in einer stabilen Lage zu fixieren, wobei die Platten (3, 6) durch einen offenen Bereich (5) getrennt sind, wobei
der sich offene Bereich (5) von einem jeweiligen Ende der Platten (3, 6) bis im Wesentlichen zur Mittelachse (Z) des Aufnahmeelements (1) hin erstreckt, wobei
die erste Platte (3) elastisch ausgebildet ist, um eine klemmende Aufnahme eines Dentalimplantat in einer Öffnung (40) der ersten Platte (3) zu gewährleisten, und wobei
die zweite Platte (6) einen zur Lagestabilisierung eines eingesetzten Dentalimplantats ausgebildeten Anschlagbereich (32) aufweist, der im Wesentlichen eine U-förmige Gestalt hat, **dadurch gekennzeichnet, dass**
der offene Bereich (5) maulartig ausgebildet ist und dass seine Weite von den jeweiligen Enden der Platten (3, 6) abnimmt.

2. Aufnahmeelement (1) für ein Dentalimplantat nach Anspruch 1, wobei die zweite Platte (6) nichtelastisch ausgebildet ist und eine Führung für das Dentalimplantat bereitstellt.

3. Aufnahmeelement (1) für ein Dentalimplantat nach Anspruch 2, wobei die erste Platte (3) elastisch in Richtung der Mittelachse (Z) des Aufnahmeelements (1) verformbar ist.

4. Aufnahmeelement (1) für ein Dentalimplantat nach Anspruch 2 oder 3, wobei die erste Platte (3) elastisch in einer Richtung, die senkrecht zur Mittelachse (Z) des Aufnahmeelements (1) verläuft, verformbar ist.

5. Aufnahmeelement (1) für ein Dentalimplantat nach irgendeinem der voranstehenden Ansprüche, wobei die erste Platte (3) im Anschluss an die Öffnung (40) einen ersten Durchbruch (23) und einen zweiten Durchbruch (24) aufweist, wobei der zweite Durchbruch (24) einen geringen Durchmesser als der erste Durchbruch (23) aufweist, und wobei der erste und der zweite Durchbruch (23, 24) mittels einer Nut (39) in Verbindung stehen.

6. Aufnahmeelement (1) für ein Dentalimplantat nach irgendeinem der voranstehenden Ansprüche, wobei die erste Platte (3) symmetrisch angeordnete Aussparungen (34, 35) aufweist, die vorzugsweise um die Öffnung (40) herum angeordnet sind.

7. Aufnahmeelement (1) für ein Dentalimplantat nach irgendeinem der voraristelienden Ansprüche, wobei es einen Rumpf (7) im Anschluss an die zweite Platte (6) aufweist, wobei der Rumpf (7) mit einer Mehrzahl von Griffelementen/ Verstärkungselementen (8) bereitgestellt ist.

8. Aufnahmeelement (1) für ein Dentalimplantat nach Anspruch 7, wobei der Rumpf (7) einen im Wesentlichen quadratischen Querschnitt aufweist.

9. Aufnahmeelement (1) für ein Dentalimplantat nach irgendeinem der voranstehenden Ansprüche, wobei das Herstellungsmaterial ein elastisch verformbarer Kunststoff ist.

## Claims

1. Receiving element (1) for a dental implant having a first plate (3) and a second plate (6) which extend perpendicularly to the center axis (Z) of the receiving element (1) and are adapted to releasably fix a dental implant in a stable position, the plates (3, 6) being separated by an open area (5), with
the open area (5) extending from a respective end of the plates (3, 6) substantially to the center axis (Z) of the receiving element (1), with
the first plate (3) being elastic so as to ensure a clamping accommodation of a dental implant in an opening (40) of the first plate (3), and with
the second plate (6) having a stopping region (32) adapted for stabilizing the position of an inserted dental implant, the stopping region substantially having a U-shape, **characterized in that**
the open area (5) is jaw-shaped and **in that** its width decreases from the respective ends of the plates (3, 6).

2. Receiving element (1) for a dental implant according to Claim 1, with the second plate (6) being non-elastic and providing a guide for the dental implant.

3. Receiving element (1) for a dental implant according to Claim 2, with the first plate (3) being elastically deformable in the direction of the center axis (Z) of the receiving element (1).

4. Receiving element (1) for a dental implant according to Claim 2 or 3, with the first plate (3) being elastically deformable in a direction which is perpendicular to the center axis (Z) of the receiving element (1).

5. Receiving element (1) for a dental implant according to any one of the above Claims, with the first plate (3) having a first recess (23) and a second recess (24) adjacent to the opening (40), with the second recess (24) having a smaller diameter than the first recess (23) and with the first and the second recess (23, 24) being interconnected by means of a groove (39).

6. Receiving element (1) for a dental implant according to any one of the above Claims, with the first plate (3) having symmetrically arranged recesses (34, 35) which are preferably arranged around the opening (40).

7. Receiving element (1) for a dental implant according to any one of the above Claims, having a body (7) adjacent to the second plate (6), the body (7) being provided with a plurality of grip elements/reinforcing elements (8).

8. Receiving element (1) for a dental implant according to Claim 7, the body (7) having a substantially square cross- section.

9. Receiving element (1) for a dental implant according to any one of the above Claims, the production material being an elastically deformable plastic.

## Revendications

1. Elément de réception (1) pour un implant dentaire ayant une première plaque (3) et une seconde plaque (6) qui s'étendent perpendiculairement à l'axe central (Z) de l'élément de réception (1) et qui sont formées afin de fixer un implant dentaire de manière amovible dans une position stable, dans lequel les plaques (3, 6) sont séparées par une zone ouverte (5),
dans lequel la zone ouverte (5) s'étend à partie d'une extrémité respective des plaques (3, 6) pratiquement jusqu'à l'axe central (Z) de l'élément de réception (1),
dans lequel la première plaque (3) est formée élastiquement afin d'assurer une réception par serrage d'un implant dentaire dans une ouverture (40) de la première plaque (3), et
dans lequel la seconde plaque (6) comporte une zone de butée (32) formée pour stabiliser la position d'un implant dentaire inséré, laquelle zone de butée a une forme sensiblement en U, caractérisé ce que
la zone ouverte (5) est formée de manière analogue à une mâchoire et en ce que sa largeur diminue à partir des extrémités respectives des plaques (3, 6).

2. Elément de réception (1) pour un implant dentaire selon la revendication 1, dans lequel la seconde plaque (6) est formée de manière non élastique et fournit un guide pour l'implant dentaire.

3. Elément de réception (1) pour un implant dentaire selon la revendication 2, dans lequel la première plaque (3) est élastiquement déformable en direction de l'axe central (Z) de l'élément de réception (1).

4. Elément de réception (1) pour un implant dentaire selon la revendication 2 ou 3, dans lequel la première plaque (3) est élastiquement déformable dans une direction perpendiculaire à l'axe central (Z) de l'élément de réception (1).

5. Elément de réception (1) pour un implant dentaire selon l'une quelconque des revendications précédentes, dans lequel la première plaque (3) comporte un premier trou traversant (23) et un second trou traversant (24) adjacents à l'ouverture (40), dans lequel le second trou traversant (24) a un diamètre plus petit que le premier trou traversant (23), et dans lequel le premier et le second trou traversant (23, 24) communiquent au moyen d'une rainure (29).

6. Elément de réception (1) pour un implant dentaire selon l'une quelconque des revendications précédentes, dans lequel la première plaque (3) comporte des évidements (34, 35) agencés de manière symétrique qui sont de préférence agencés autour de l'ouverture (40).

7. Elément de réception (1) pour un implant dentaire selon l'une quelconque des revendications précédentes, dans lequel il comporte un corps (7) adjacent à la seconde plaque (6), dans lequel le corps (7) est fourni avec une pluralité d'éléments de préhension/d'éléments de renfort (8).

8. Elément de réception (1) pour un implant dentaire selon la revendication 7, dans lequel le corps (7) a une section transversale sensiblement quadratique.

9. Elément de réception (1) pour un implant dentaire selon l'une quelconque des revendications précédentes, dans lequel le matériau de fabrication est une matière plastique élastiquement déformable.
